# EUROPEAN PATENT SPECIFICATION

(11) **EP 4 067 118 B1**
(45) Date of publication and mention of the grant of the patent: **10.07.2024**
(21) Application number: 20893274.9
(22) Date of filing: 25.11.2020
(51) Int. Cl.: B60C 11/03, B60C 11/13, B60C 11/12

(54) **TIRE**
REIFEN
PNEUMATIQUE

(30) Priority: 29.11.2019 JP 2019216888
(43) Date of publication of application: 05.10.2022
(73) Proprietor: BRIDGESTONE CORPORATION, Chuo-ku Tokyo 104-8340 (JP)
(72) Inventor: ISHIHARA Nobuyuki, Chuo-ku, Tokyo 104-8340 (JP)
(74) Representative: Marks & Clerk LLP
(86) International application number: PCT/JP2020/043774
(87) International publication number: WO 2021/106919

(56) References cited:
- EP-A1- 2 732 982
- JP-A- 2001 039 123
- JP-A- 2001 055 014
- JP-A- 2003 146 022
- JP-A- 2003 170 704
- JP-A- 2004 359 150
- JP-A- 2008 222 071
- JP-A- 2011 046 260
- JP-A- 2011 063 079
- JP-A- H11 139 113
- JP-A- H11 147 407
- US-A1- 2006 037 684
- US-A1- 2019 351 714

## Description

### TECHNICAL FIELD

The present invention relates to a tire with improved driving performance on snow.

### BACKGROUND ART

Patent Document 1 describes a tire in which a plurality of circumferential main grooves are formed in a tread section and a shoulder widthwise groove extending in a tire width direction is formed in a shoulder land region. According to such a tire configuration, an uneven wear resistance at a shoulder block may be improved while ensuring the on-snow traction performance. Attention is also drawn to the disclosures of JP2001-055014A, JP2004-359150A, JP2003-146022A, JP2011-063079A, JP2001-039123A, JP2003-170704A, JP2008-222071A, US2006-037684A1, JPH11-147407A, JP2011-046260A, JPH11-139113A, US2019/351714A1, EP2732982A1.

### CITATION LIST

### PATENT LITERATURE

Patent Literature 1: Japanese Unexamined Patent Application Publication No. 2018-176958

### SUMMARY OF INVENTION

### TECHNICAL PROBLEM

However, in the conventional tire, when the tire kicks out a snow column, the snow column formed by pressing a snow entered a lateral groove at a ground contact surface of the tire, a snow-column shear force may be lowered if a detachment of snow from a groove wall of the lateral groove is insufficient. In the case of driving on snow with such a tire, a driving performance may be deteriorated when a part of the groove is clogged with a pressed snow without being detached from the groove wall.

An object of the present invention is to provide a tire that may improve on-snow performance by facilitating detachment of snow from a groove wall of a lateral groove formed on a surface of a tread section.

### SOLUTION TO PROBLEM

A tire according to the present invention is provided as claimed in claim 1.

### ADVANTAGEOUS EFFECTS

According to the above configuration, a tire with improved on-snow performance by facilitating detachment of snow from a lateral groove formed on a tread surface.

### BRIEF DESCRIPTION OF DRAWINGS

FIG. 1 is a partial plan view illustrating a tread pattern of a tread section 10.
FIG. 2 is a partial enlarged plan view of a shoulder land region SR including a circumferential main groove 20.
FIG. 3(a) is an enlarged perspective view of a part of one groove wall 31 that forms a shoulder lateral groove 30 and includes an inclined surface 32, which is not according to the present invention, but useful for understanding the present invention.
FIG. 3(b) is an enlarged end view perpendicular to a tire axial direction TA, which illustrates a part of the inclined surface 32 of the groove wall 31 at a tire widthwise-inner position, which is not according to the present invention, but useful for understanding the present invention.
FIG. 3(c) is an enlarged end view perpendicular to the tire axial direction TA, which illustrates a part of the inclined surface 32 of the groove wall 31 at a tire widthwise-outer position.
FIG. 4(a) is an enlarged perspective view of a part of a groove wall 31 according to a variant, the part including an inclined surface 32A.
FIGS. 4(b) to 4(c) are enlarged end views perpendicular to the tire axial direction TA, each of which illustrates a part including the inclined surface 32A of the groove wall 31 according to the variant.
FIG. 5 is an enlarged explanatory view of a part of the shoulder land region SR explaining a snow detachment feature of the inclined surface 32 of the groove wall 31.

### DESCRIPTION OF EMBODIMENTS

Embodiments will be described below with reference to the drawings. It should be noted that the same functions and configurations are denoted by the same or similar reference numerals, and the description thereof is appropriately omitted.

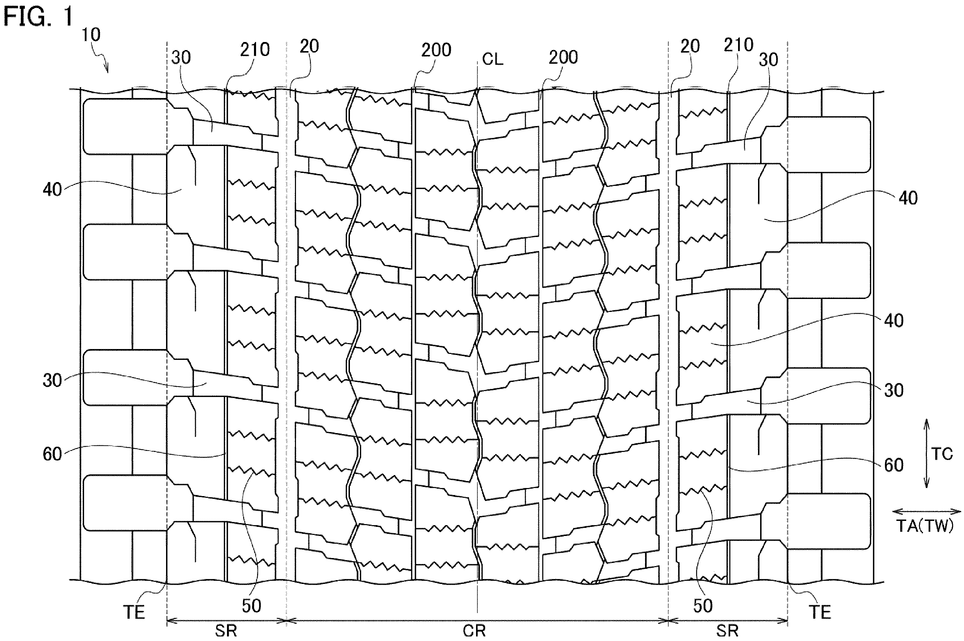

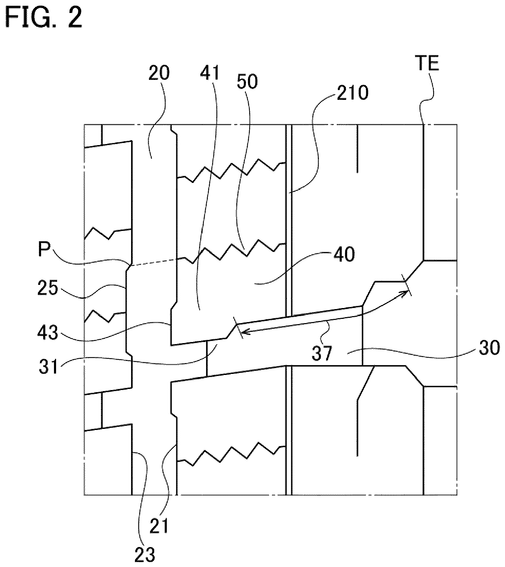

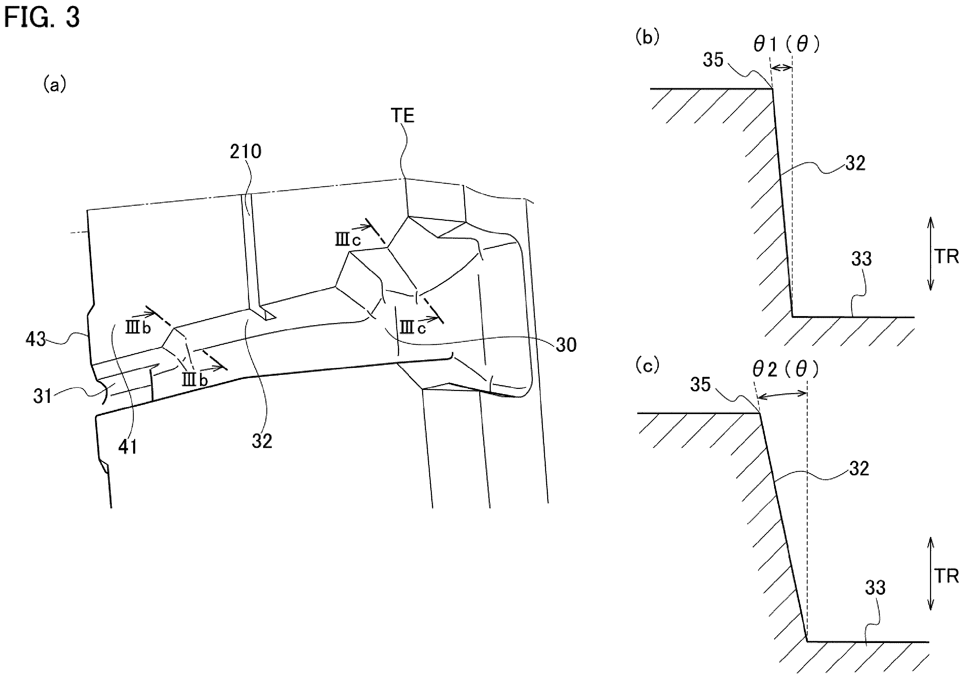

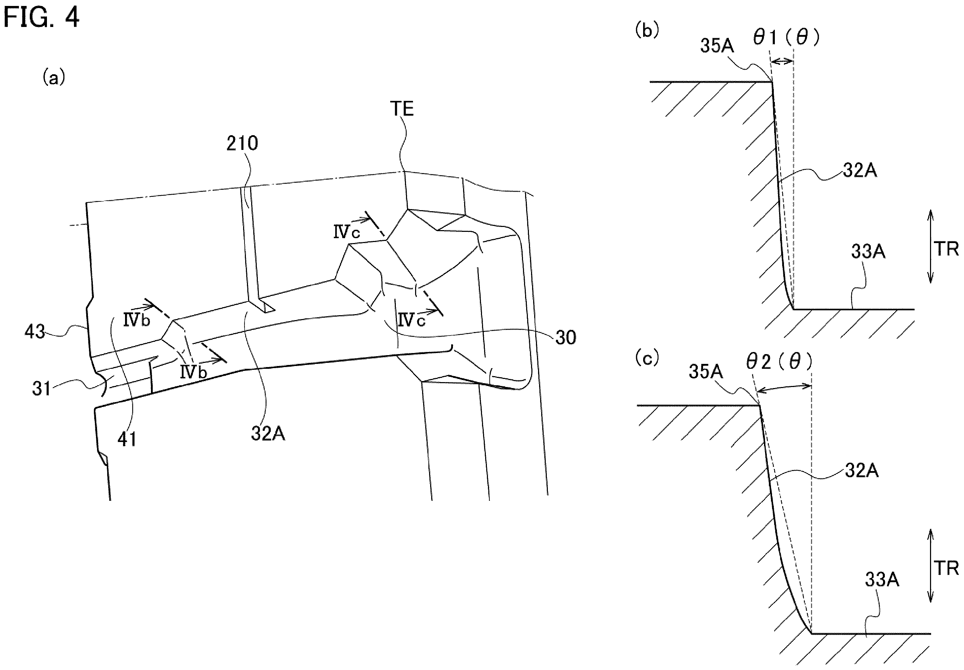

FIG. 1 is a partial plan view illustrating a tread pattern of a tread section 10 of a tire according to present embodiment. FIG. 2 is a partial enlarged plan view of a shoulder land region SR including a circumferential main groove 20. FIG. 3(a) is an enlarged perspective view of a part including an inclined surface 32 of one groove wall 31 forming a shoulder lateral groove 30, which is not according to the present invention, but is useful for understanding the present invention. FIG. 3(b) is an enlarged end view perpendicular to a tire axial direction TA, which illustrates a part of the inclined surface 32 of the groove wall 31 at the tire-widthwise inner position. FIG. 3(c) is an enlarged end view perpendicular to the tire axial direction TA, which illustrates a part of the inclined surface 32 of the groove wall 31 at a tire-widthwise outer position. FIG. 4(a) is an enlarged perspective view of a part of a groove wall 31 according to a variant, which is according to the present invention, the part including an inclined surface 32A. FIGS. 4(b) to 4(c) are enlarged end views perpendicular to the tire axial direction TA, each of which illustrates a part including the inclined surface 32A of the groove wall 31 according to the variant.

The tread section 10 is formed with a tread pattern in accordance with a performance required for the tire. In this embodiment, the tire is a studless tire that can be suitably used for trucks and buses (TB). The studless tire may be referred to as a snow tire or a winter tire. Alternatively, the tire may be a so-called all-season tire usable not only in winter but also in all seasons.

The tire is not necessarily used for a truck or a bus, but may be used for other types of vehicles, for example, a passenger automobile, a van, and a light-duty truck.

As illustrated in FIG. 1, a pair of circumferential main grooves 20 extending along a tire circumferential direction TC is formed in the tread section 10. In this embodiment, the pair of circumferential main grooves 20 extends linearly. However, the pair of circumferential main grooves 20 may not necessarily extend linearly, such as coasting slightly in the tire width direction.

The tread section 10 is delimited into a center land region CR in which the tire width direction TW is delimited by the pair of circumferential main grooves 20, and a shoulder land region SR located on outside of the center land region CR in the tire width direction TW and delimited by one circumferential main groove 20 of the pair of circumferential main grooves 20 and a tread end TE.

In the present embodiment, a circumferential groove having a groove width equal to a groove width of the one circumferential main groove 20 or a groove width wider than the groove width of the one circumferential main groove 20 is not formed in the center land region CR.

In other words, only a circumferential narrow groove 200 extending in the tire circumferential direction and having a groove width narrower than the circumferential main groove 20 is formed in the center land region CR. Therefore, in the center land region CR, the distance between adjacent land blocks (which may be called spacing or gap) is narrow. Therefore, in the center land region CR, a plurality of land blocks are densely arranged with respect to arrangement of land blocks in a general tire of this type.

In the present embodiment, the groove width of the one circumferential main groove 20 is about 4mm to 10mm, and the groove width of the circumferential narrow groove 200 is about 1.5mm to 4mm.

The tire according to this embodiment includes a lateral groove 30 formed in the tread section 10 and extending in the tire width direction TW. Specifically, a shoulder lateral groove (lateral groove) 30 crossing in the tire width direction TW from the circumferential main groove 20 to the tread end TE is formed in at least one shoulder land region SR. In this embodiment, a plurality of the shoulder lateral grooves 30 are formed in the shoulder land region SR. The shoulder land region SR is delimited into a plurality of blocks 40 by the plurality of the shoulder lateral grooves 30.

A sipe 50 extending in the tire width direction TW and communicating with the circumferential main groove 20 is formed in each block 40 of the shoulder land region SR. Here, the sipe 50 is a narrow groove formed to have a groove width (for example, a groove width of 0.1mm to 1.5mm), which is configured to close in the ground plane when the tire is grounded. In this embodiment, the sipe 50 is a so-called three-dimensional sipe that is bent a plurality of times.

As illustrated in FIG. 2, on a surface forming a first groove wall 21 of the circumferential main groove 20 in each block 40, a projection 43 projecting inner side in the tire width direction TW is formed at a corner part 41, where the circumferential main groove 20 intersects the shoulder lateral groove 30.

In the present embodiment, the three-dimensional sipe 50 is not formed at a circumferential position where the projection 43 of each block 40 is formed. It should be noted that a sipe might be formed on a block 40 at a circumferential position where the projection 43 is formed, if the sipe has an end part in tire width direction TW on the circumferential main groove 20 side not opened to the circumferential main groove 20 at the projection 43.

In the tread section 10 of the tire according to the present embodiment, a circumferential narrow groove 210 extending in the tire circumferential direction TC is also formed in the shoulder land region SR. Specifically, each block 40 is formed to have a circumferential narrow groove 210 extending in the tire circumferential direction TC and having a groove width narrower than the groove width of the circumferential main groove 20. The groove width of the circumferential narrow groove 210 formed in the shoulder land region SR may be the same as the groove width of the circumferential narrow groove 200 formed in the center land region CR at an upper limit, and may be the same as the groove width of the sipe at a lower limit. Specifically, the groove width of the circumferential narrow groove 210 is 0.1mm to 4mm.

As illustrated in FIG. 2, an outer end of the three-dimensional sipe 50 in the tire width direction may communicate with the circumferential narrow groove 210. A groove depth of the circumferential narrow groove 210 may be shallower than a groove depth of the shoulder lateral groove 30 as illustrated in FIG. 3(a).

As illustrated in FIG. 2, one groove wall 31 forming the shoulder lateral groove 30 at the corner part 41 of the block 40 may be formed in protruding shape protruding in the tire circumferential direction TC, the corner part 43 being a part where the projection 43 is formed. That is, the corner part 41 of the block 40 including the protruding shape protruding in the tire circumferential direction TC may protrude toward inner side in the tire width direction TW (toward an tire equator line CL side) and toward the tire circumferential direction TC side at the groove walls of the circumferential main groove 20 and the shoulder lateral groove 30. In the present embodiment, only one groove wall 31 of the shoulder lateral groove 30 is formed to include the protruding shape protruding in the tire circumferential direction TC.

As illustrated in FIG. 2, in the second groove wall 23 of the circumferential main groove 20, a recess 25 recessed in the tire width direction TW is formed at a position opposed to the circumferential position of the first groove wall 21 where the projection 43 is formed. The intersection P between the second groove wall 23 and an extension line of the three-dimensional sipe 50 extending in the tire width direction TW is located in the recess 25, including an end part in the tire circumferential direction TC of the recess 25. The extension line of the three-dimensional sipe 50 extending in the tire width direction TW is illustrated by a broken line in FIG. 2.

At least one groove wall 31 of the shoulder lateral groove (lateral groove) 30 in the tire according to the present embodiment has an inclined surface 32 with curved shape. In the cross section perpendicular to the tire axial direction TA, an inclination angle θ of the inclined surface 32, which has curved shape, with respect to a tire radial direction TR is formed to gradually increase from the inner side in the tire width direction on the tire equatorial line CL side to an outer side the tire width direction. The inclination angle θ of the inclined surface 32 is an inclination angle from a groove bottom 33 of the shoulder lateral groove 30 to a tread surface 35.

Specifically, as illustrated in FIGS. 3(a) to 3(c), an inclined surface 32 with curved shape is formed on the groove wall 31 of the shoulder lateral groove 30, which delimits the shoulder land region SR into a plurality of blocks 40. The inclination angle θ of the inclined surface 32, which has curved shape, with respect to the tire radial direction TR gradually increases from the inner side in the tire width direction TW (see FIG. 3(b)) to the outer side in the tire width direction TW (see FIG. 3(c)).

For example, the inclination angle θ1 at the inner end in the tire width direction TW of the inclined surface 32 with curved shape illustrated in FIG. 3(b) is 5° to 10°. The inclination angle θ2 at the outer end in the tire width direction TW of the inclined surface 32 with curved shape illustrated in FIG. 3(c) is 5° to 20°. The inclination angle θ of the inclined surface 32 with curved shape is selected in a range satisfying a condition that the inclination angle θ increases gradually from the inclination angle θ1 at the inner end in the tire width direction to the inclination angle θ2 at the outer end in the tire width direction.

Although the contents of the present invention have been described in accordance with embodiments, it will be apparent to those skilled in the art that the present invention is not limited to these descriptions and that various modifications and improvements are possible.

In the end face perpendicular to the tire axial direction TA illustrated in FIGS. 3(b) and 3(c) of the present embodiment, the inclined surface 32 is inclined linearly from the groove bottom 33 of the groove wall 31 to the tread surface 35. However, the inclined surface with curved shape is not limited to the embodiment illustrated in FIGS. 3(a) to 3(c) as long as the surface from the groove bottom 33 to the tread surface 35 is inclined. For example, as in a variant illustrated in FIGS. 4(a) to 4(c), an inclined surface 32A with curved shape may have an end face, the end face perpendicular to the tire axial direction TA, inclined from a groove bottom 33A of the groove wall 31 to a tread surface 35A and curved to be convex downward, as illustrated in FIGS. 4(b) and 4(c).

Further, as illustrated in FIG. 1, the tread pattern formed on the tread section 10 of the tire according to the present embodiment has a pattern in which the tire rotation direction is designated so that the effect is remarkably exhibited during driving. However, the tread pattern is not limited to this. For example, in a case where it is desirable to have a structure that exhibits the effect in a good balance between driving and braking, a pattern inverted at the tire equatorial line CL may be used.

A rubber used for the tread section 10 may be made of an appropriate material in consideration of on-snow performance and wear resistance, and is not particularly limited. However, a material that may contribute to a reduction of rolling resistance (RR) of the tire may be used. Specifically, the rolling resistance coefficient (RRC) is preferably 7.5 or less.

### (Action/Effect)

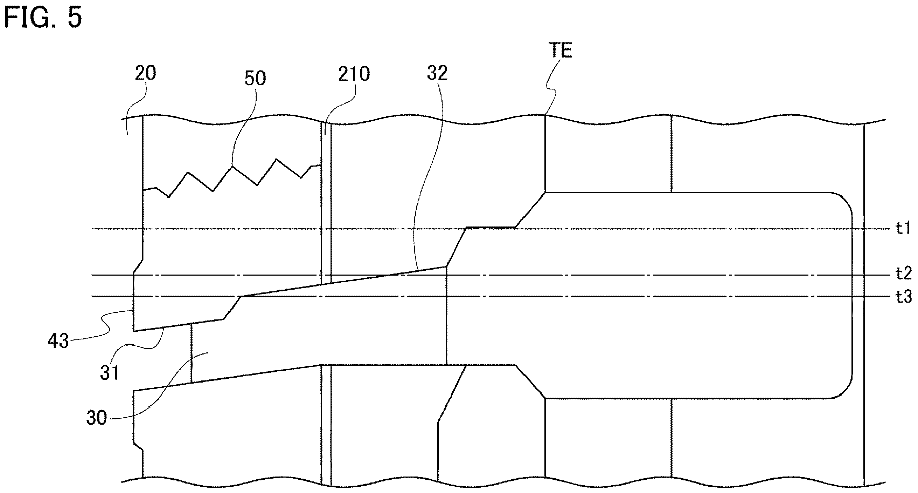

FIG. 5 is a partial enlarged plan view of the shoulder land region SR, and is an explanatory view for explaining a snow detachment feature of the inclined surface 32 of the groove wall 31. In FIG. 5, reference signs t1, t2, and t3 each denotes boundary position between a contact surface of the tire and a portion separated from the ground on a kick-out side. FIG. 5 is an explanatory view illustrating that the boundary position shifts from t1 to t2 and from t2 to t3 as the tire rolls.

In the tire according to the present embodiment, the groove wall 31 of the shoulder lateral groove 30, which delimits the shoulder land region SR into the plurality of blocks 40, has the inclined surface 32 with curved shape. In the cross section perpendicular to the tire axial direction TA, the inclination angle θ of the inclined surface 32, which has curved shape, with respect to the tire radial direction TR is formed to increase gradually from the inner side in the tire width direction to the outer side the tire width direction. The operation of the shoulder lateral groove (lateral groove) 30 having the inclined surface 32 with curved shape on at least one of the groove walls 31 will be described with reference to FIGS. 3(a) to 5.

When the tire rolls, a deformation of the tread section 10 on the kick-out side on the contact surface of the tire starts by widening the groove width of the shoulder lateral groove 30 on an outer side of the tire width direction TW, that is, on the tread end TE side of the tire in this embodiment, and then on an inner side of the tire width direction TW.

At the boundary position t1 between the tire and the ground illustrated in FIG. 5, the inclined surface 32 with curved shape of the present embodiment has a configuration, as illustrated in FIGS. 3(c) and 4(c), of being inclined significantly with respect to the tire radial direction TR on the tread end TE side (outer side in the tire width direction) where the groove width starts to widen. Therefore, the snow column formed by pressing a snow entered into the shoulder lateral groove 30 at the contact surface of the tire is easily detached from the groove wall at outer side in the tire width direction TW on the inclined surface 32 with curved shape.

Further, the inclined surface 32 with curved shape of the present embodiment includes a configuration in which the inclination angle θ, the inclination angle from the groove bottom 33 to the tread surface 35, with respect to the tire radial direction TR, becomes gradually smaller toward the inner side in the tire width direction TW as illustrated in FIGS. 3(a) to 4(c) in the cross section perpendicular to the tire axial direction TA.

Since a portion moved to a state not in contact with the ground surface, which is a state the portion being not subjected to the ground contact pressure, can be deformed in the tire circumferential direction larger than a portion in a state being in contact with the ground surface, the inclined surface 32 with curved shape of the present embodiment is torsionally deformed as the boundary position between the tire and the ground surface illustrated in FIG. 5 shifts from t1 to t2 and then from t2 to t3.

Thus, the inclined surface 32 with curved shape facilitates detachment of snow from the groove wall 31 of the shoulder lateral groove 30. That is, snow hardly remains in the groove on the other groove wall of the shoulder lateral groove 30 opposed to the groove wall 31. According to this configuration, the shoulder lateral groove 30 can grasp new snow when contacting the ground again by the tire rolling. Therefore, a snow column shearing force, the force generated when shearing a snow in the shoulder lateral groove 30, is enhanced, and the on-snow performance of the tire is improved.

In the present embodiment, the inclined surface 32 with curved shape is formed in the groove wall 31 of the shoulder lateral groove 30. However, a portion where the inclined surface 32 with curved shape is formed is not limited to the shoulder lateral groove 30 formed in the shoulder land region SR. The portion where the inclined surface 32 with curved shape is formed may be formed in a lateral groove extending in the tire width direction TW.

Specifically, in the lateral groove extending in the tire width direction TW, if the inclination angle θ of the inclined surface 32, which has curved shape, with respect to the tire radial direction TR in the cross section perpendicular to the tire axial direction TA is gradually increased from the inner side in the tire width direction TW on the tire equatorial line CL side to the outer side of the tire width direction TW, the inclined surface 32 with curved shape exhibits excellent on-snow performance.

In the case where the center land region CR has a structure in which a plurality of land blocks are densely arranged as in the present embodiment, the center land region CR is delimited by the circumferential narrow grooves 200. Therefore, the blocks or ribs delimited by the circumferential narrow grooves 200 support each other along the circumferential direction during deformation, and deformation of the blocks or ribs in the tire width direction TW is suppressed. Therefore, uneven wear resistance in the center land region CR can be improved. Further, the rolling resistance of the tire can be reduced.

When the center land region CR has a structure, in which a plurality of land blocks are densely arranged, deformation of the center land region CR in the tire width direction TW is suppressed. As a result, the ground pressure in the shoulder land region SR is relatively increased. Accordingly, deformation of the shoulder land region SR becomes large. In such a configuration, when the inclined surface 32 with curved shape is formed in the lateral groove 30 of the shoulder land region SR, a dynamic torsional deformation of the block 40 becomes large, and the on-snow performance is further improved.

As illustrated in FIGS. 1 and 2, the circumferential narrow groove 210 may communicate with the inclined surface 32 with curved shape. Since the circumferential narrow groove 210 is shallower than the groove depth of the shoulder lateral groove 30, the block 40 can be deformed circumferentially to such an extent that the dynamic torsional deformation of the inclined surface 32 with curved shape extending in the tire width direction TW is not inhibited. Therefore, the uneven wear resistance of the tire can be improved while securing the effect of improving on-snow performance by the inclined surface 32 with curved shape.

As illustrated in FIGS. 3(a) to 3(c), when the inclined surface 32 with curved shape is inclined linearly from the groove bottom 33 of the groove wall 31 to the tread surface 35 in the cross section perpendicular to the tire axial direction TA, the deformed shape due to the dynamic torsional deformation of the block 40 on the inclined surface 32 with curved shape is more stable, and the effect of improving the on-snow performance can be stably secured.

As illustrated in FIGS. 4(a) to 4(c), when the inclined surface 32 with curved shape is a surface from the groove bottom 33 of the groove wall 31 to the tread surface 35 that is inclined in a downward convex manner in the cross section perpendicular to the tire axial direction TA, the durability of the inclined surface 32 with curved shape against dynamic torsional deformation can be improved.

### [DELETED]

Thus, although embodiments of the invention have been described, it should not be understood that the arguments and drawings that form part of this disclosure limit the invention. Various alternative embodiments, examples, and operational techniques will be apparent to those skilled in the art from this disclosure.

### REFERENCE SIGNS LIST

- 10: TREAD SECTION
- 20: CIRCUMFERENTIAL MAIN GROOVE
- 21: FIRST GROOVE WALL OF CIRCUMFERENTIAL MAIN GROOVE
- 23: SECOND GROOVE WALL OF CIRCUMFERENTIAL MAIN GROOVE
- 25: RECESS
- 30: SHOULDER LATERAL GROOVE (LATERAL GROOVE)
- 31: ONE GROOVE WALL FORMING SHOULDER LATERAL GROOVE
- 32, 32A: INCLINED SURFACE WITH CURVED SHAPE
- 33, 33A: GROOVE BOTTOM
- 35, 35A: TREAD SURFACE
- 40: BLOCK
- 41: CORNER PART
- 43: PROJECTION
- 50: THREE-DIMENSIONAL SIPE (SIPE)
- 200: CIRCUMFERENTIAL NARROW GROOVE IN CENTER LAND REGION
- 210: CIRCUMFERENTIAL NARROW GROOVE IN SHOULDER LAND REGION
- CL: TIRE EQUATORIAL LINE
- CR: CENTER LAND REGION
- SR: SHOULDER LAND REGION
- θ: INCLINATION ANGLE
- TE: TREAD END
- TA: TIRE AXIAL DIRECTION
- P: INTERSECTION BETWEEN EXTENSION LINE OF THREE-DIMENSIONAL SIPE AND SECOND GROOVE WALL

## Claims

1. A tire comprising a lateral groove (30) formed in a tread section (10) and extending in a tire width direction (TW), wherein
one groove wall (31) forming the lateral groove (30) includes an inclined surface (32A) with curved shape, and
the inclined surface (32A) has an inclination angle (θ), the inclination angle (θ) being an angle with respect to a tire radial direction (TR) from a groove bottom (33A) to a tread surface (35A) in a cross section perpendicular to a tire axial direction (TA), that gradually increases from an inner side in the tire width direction (TW) on a tire equatorial line (CL) side to an outer side in the tire width direction (TW), wherein
in the cross section perpendicular to the tire axial direction (TA), the one groove wall (31) of the inclined surface (32A) from the groove bottom (33A) to the tread surface (35A) is curved convexly downward, wherein
a pair of circumferential main grooves (20) are formed in the tread section (10), and the tread section (10) includes:
a center land region (CR) delimited by the pair of circumferential main grooves (20) and comprising a cohesive structure, in which no main groove extending along a circumferential direction (TC) is formed; and
a shoulder land region (SR) located outside in the tire width direction (TW) of the center land region (CR) delimited by one circumferential main groove (20) of the pair of circumferential main grooves (20) and a tread end (TE),
wherein the inclined surface (32A) is included in a groove wall (31) of the lateral groove (30) formed in the shoulder land region (SR), wherein
in the cohesive structure of the center land region, a circumferential groove having a groove width equal to a groove width of the one circumferential main groove (20) or a groove width wider than the groove width of the one circumferential main groove (20) is not formed in the center land region (CR), wherein
only a circumferential narrow groove (200) extending in the tire circumferential direction and having a groove width narrower than the groove width of the circumferential main groove (20) is formed in the center land region (CR).

2. The tire according to claim 1, wherein the tread section (10) has a circumferential narrow groove (210) communicating with the inclined surface (32A) and extending in the tire circumferential direction (TC), and a groove depth of the circumferential narrow groove (210) is shallower than a groove depth of the lateral groove (30).

3. The tire according to claim 1 or 2, wherein the lateral groove (30) is formed to cross the shoulder land region (SR) in the tire width direction (TW).

## Patentansprüche

1. Reifen, der eine seitliche Rille (30) umfasst, die in einer Laufflächensektion (10) geformt ist und sich in einer Reifenbreitenrichtung (TW) erstreckt, wobei
eine Rillenwand (31), welche die seitliche Rille (30) bildet, eine geneigte Fläche (32A) mit einer gekrümmten Form einschließt, und
die geneigte Fläche (32A) einen Neigungswinkel (θ) aufweist, wobei der Neigungswinkel (θ) ein Winkel in Bezug auf eine Reifenradialrichtung (TR) von einer Rillensohle (33A) bis zu einer Lauffläche (35A) in einem Querschnitt senkrecht zu einer Reifenaxialrichtung (TA) ist, der von einer in der Reifenbreitenrichtung (TW) inneren Seite auf einer Seite einer Reifenäquatoriallinie (CL) bis zu einer in der Reifenbreitenrichtung (TW) äußeren Seite allmählich zunimmt, wobei
in dem Querschnitt senkrecht zu der Reifenaxialrichtung (TA), die eine Rillenwand (31) der geneigten Fläche (32A) von der Rillensohle (33A) bis zu der Lauffläche (35A) konvex nach unten gekrümmt ist, wobei
ein Paar von umlaufenden Hauptrillen (20) in der Laufflächensektion (10) geformt ist und die Laufflächensektion (10) Folgendes einschließt:
einen Mittelstegbereich (CR), der durch das Paar von umlaufenden Hauptrillen (20) begrenzt wird und eine zusammenhängende Struktur umfasst, in der keine Hauptrille, die sich entlang einer Umfangsrichtung (TC) erstreckt, geformt ist; und
einen Schulterstegbereich (SR), der sich in der Reifenbreitenrichtung (TW) außerhalb des Mittelstegbereichs (CR) befindet, begrenzt durch eine umlaufende Hauptrille (20) von dem Paar von umlaufenden Hauptrillen (20) und ein Laufflächenende (TE),
wobei die geneigte Fläche (32A) in einer Rillenwand (31) der seitlichen Rille (30) eingeschlossen ist, die in dem Schulterstegbereich (SR) geformt ist, wobei
in der zusammenhängenden Struktur des Mittelstegbereichs eine umlaufende Rille, die eine Rillenbreite, gleich einer Rillenbreite der einen umlaufenden Hauptrille (20), oder eine Rillenbreite, breiter als die Rillenbreite der einen umlaufenden Hauptrille (20), aufweist, in dem Mittelstegbereich (CR) nicht geformt ist, wobei
nur eine umlaufende schmale Rille (200), die sich in der Reifenumfangsrichtung erstreckt und eine Rillenbreite, schmaler als die Rillenbreite der umlaufenden Hauptrille (20), aufweist, in dem Mittelstegbereich (CR) geformt ist.

2. Reifen nach Anspruch 1, wobei die Laufflächensektion (10) eine umlaufende schmale Rille (210) aufweist, die mit der geneigten Fläche (32A) in Verbindung steht und sich in der Reifenumfangsrichtung (TC) erstreckt, und eine Rillentiefe der umlaufenden schmalen Rille (210) flacher ist als eine Rillentiefe der seitlichen Rille (30).

3. Reifen nach Anspruch 1 oder 2, wobei die seitliche Rille (30) so geformt ist, dass sie den Schulterstegbereich (SR) in der Reifenbreitenrichtung (TW) kreuzt.

## Revendications

1. Pneumatique, comprenant une rainure latérale (30) formée dans une section de bande de roulement (10) et s'étendant dans une direction de la largeur du pneumatique (TW), dans lequel
une paroi de rainure (31) formant la rainure latérale (30) inclut une surface inclinée (32A) avec une forme courbée ; et
la surface inclinée (32A) présente un angle d'inclinaison (θ), l'angle d'inclinaison (θ) étant un angle par rapport à une direction radiale du pneumatique (TR), d'un fond de rainure (33A) vers une surface de bande de roulement (35A), dans une section transversale perpendiculaire à une direction axiale du pneumatique (TA), qui est accru progressivement d'un côté interne, dans la direction de la largeur du pneumatique (TW), sur un côté d'une ligne équatoriale du pneumatique (CL), vers un côté externe, dans la direction de la largeur du pneumatique (TW), dans lequel
dans la section transversale perpendiculaire à la direction axiale du pneumatique (TA), ladite une paroi de rainure (31) de la surface inclinée (32A), du fond de rainure (33A) vers la surface de bande de roulement (35A), est courbée de manière convexe vers le bas, dans lequel
une paire de rainures circonférentielles principales (20) sont formées dans la section de bande de roulement (10), et la section de bande de roulement (10) inclut :
une région d'appui centrale (CR) délimitée par la paire de rainures circonférentielles principales (20) et comprenant une structure cohésive, dans laquelle aucune rainure principale s'étendant le long d'une direction circonférentielle (TC) n'est formée ; et
une région d'appui d'épaulement (SR) située à l'extérieur, dans la direction de la largeur du pneumatique (TW), de la région d'appui centrale (CR), délimitée par une rainure circonférentielle principale (20) de la paire de rainures circonférentielles principales (20) et une extrémité de la bande de roulement (TE) ;
dans lequel la surface inclinée (32A) est incluse dans une paroi de rainure (31) de la rainure latérale (30) formée dans la région d'appui d'épaulement (SR), dans lequel
dans la structure cohésive de la région d'appui centrale, une rainure circonférentielle ayant une largeur de rainure égale à une largeur de rainure de ladite une rainure circonférentielle principale (20) ou une largeur de rainure supérieure à la largeur de rainure de ladite une rainure circonférentielle principale (20) n'est pas formée dans la région d'appui centrale (CR), dans lequel
seule une rainure circonférentielle étroite (200) s'étendant dans la direction circonférentielle du pneumatique, et ayant une largeur de rainure inférieure à la largeur de rainure de la rainure circonférentielle principale (20) est formée dans la région d'appui centrale (CR).

2. Pneumatique selon la revendication 1, dans lequel la section de bande de roulement (10) comporte une rainure circonférentielle étroite (210) communiquant avec la surface inclinée (32A) et s'étendant dans la direction circonférentielle du pneumatique (TC), et une profondeur de rainure de la rainure circonférentielle étroite (210) est inférieure à une profondeur de rainure de la rainure latérale (30).

3. Pneumatique selon les revendications 1 ou 2, dans lequel la rainure latérale (30) est formée de sorte à croiser la région d'appui d'épaulement (SR) dans la direction de la largeur du pneumatique (TW).
